# EUROPÄISCHE PATENTSCHRIFT

(11) **EP 2 535 016 B1**
(45) Veröffentlichungstag und Bekanntmachung des Hinweises auf die Patenterteilung: **03.02.2016**
(21) Anmeldenummer: 12183845.2
(22) Anmeldetag: 21.06.2006
(51) Int. Cl.: A61C 5/06

(54) **Handgerät, insbesondere für dentale Zwecke, zur Abgabe einer pastösen Füllmasse**
Hand-held device, in particular for dental purposes, for dispensing a paste filler
Appareil manuel, en particulier à des fins dentaires, pour la distribution d'une masse de remplissage pâteuse

(30) Priorität: 22.06.2005 DE 102005028925
(43) Veröffentlichungstag der Anmeldung: 19.12.2012
(62) Teilanmeldung aus: 06762126.8
(73) Patentinhaber: Kaltenbach & Voigt GmbH, 88400 Biberach (DE)
(72) Erfinder: Mössle, Walter, 88441 Mittelbiberach (DE)
(74) Vertreter: Thun, Clemens

(56) Entgegenhaltungen:
- WO-A1-01/17454
- WO-A1-2004/071326
- WO-A1-2004/082508
- DE-U1- 9 215 754
- GB-A- 2 083 555

## Beschreibung

Die Erfindung betrifft einen Behälter für die Aufnahme einer aushärtbaren medizinischen, insbesondere dentalmedizinischen, Füllmasse.

In der Medizintechnik ist es bekannt, Kavitäten in einem tierischen oder menschlichen Körperteil oder in einer Prothese mit einem Füllmaterial auszufüllen und somit zu reparieren, z. B. nach der spanabhebenden Ausarbeitung eines Defektes. Hierfür werden aushärtbare Füllmassen verwendet, die in einem pastösen oder flüssigen Zustand in die Kavität eingebracht werden und dann aushärten. Dabei ist zwischen einer direkten Füllung und einer indirekten Füllung zu unterscheiden. Bei einer direkten Füllung wird nur die Füllmasse in die Kavität eingebracht, so daß sie die Kavität ausfüllt. Bei einer indirekten Füllung wird ein vorzugsweise angepaßtes Inlay-Einlegeteil mit der Füllmasse in die Kavität eingesetzt, so daß letzteres das Einlegeteil mit der Wandung der Kavität verbindet. Hierbei ist nicht nur eine mechanische Verankerung der Füllmasse in der Kavität wichtig, sondern auch eine dichte Aufnahme der Füllmasse in der Kavität, um Spalte zu vermeiden, durch die hindurch Verunreinigungen und Keime eindringen können, die bei einem Körpergewebe zu Entzündungen führen und die Präparation zerstören können.

Ein typischer Anwendungsfall einer vorbeschriebenen Präparation, bei der besondere Anforderungen bezüglich eines Handgerätes, bspw. für dentale Zwecke, und dessen Handhabung bestehen, ist die Zahnpräparieung im Mundraum eines Patienten oder eines Übungskopfes für Lernzwecke. Bei einem solchen dentalmedizinischen Behandlungsfall bestehen besondere Anforderungen bezüglich der Konstruktionsgröße des Handstücks, da der Mundraum eines Patienten verhältnismäßig klein ist und deshalb unter Berücksichtigung einer erforderlichen Sichtfreiheit eine möglichst kleine Konstruktionsgröße anzustreben ist.

In der DE 100 01 513 A1 sind ein Verfahren zum Füllen einer Zahn-Füllmasse auf Kunstharzbasis in eine Kavität eines Zahnes und ein Handgerät zur Durchführung eines solchen Verfahrens beschrieben, wobei während des Füllens mit Schall, insbesondere mit Ultraschall auf die Füllmasse und eine Düse des Handgerätes eingewirkt wird und das Handgerät Mittel aufweist, welche die Füllmasse aus einem Vorratsbehälter der Düse fördern. Dieses bekannte Verfahren und Handgerät ermöglicht es, Füllmassen mit einem verhältnismäßig hohen Gehalt an Füllstoffen zu verwenden, die die Zähigkeit der Füllmasse vergrößern und dabei das Schrumpfen und die Gefahr einer Spaltbildung beim Aushärten verringern. Bei diesem vorbekannten Handgerät ist eine Hebeleinrichtung zum Fördern der Füllmasse vorgesehen, die bei ihrer manuellen Betätigung zugleich eine Ultraschallquelle, insbesondere einen Piezoschwinger, einschaltet, die bzw. der im hinteren Bereich des Handgerätekörpers angeordnet ist. Die Füllmasse ist in einer Kartusche angeordnet, die in einen im vorderen Endbereich des Handgerätekörpers angeordneten Ausschnitt einsetzbar und fixierbar ist. Beim manuellen Betätigen der Hebeleinrichtung wird die Füllmasse durch einen mit der Hebeleinrichung verbundenen und auf das hintere Ende der Kartusche einwirkenden Vorschubstempel herausgefördert.

Aus der EP 0 480 472 B1 ist ein Verfahren zur Herstellung von Dentalmassen zu entnehmen, die ein Bindemittel oder einen so hohen Anteil an Füllstoffen enthalten, daß die Dentalmasse an sich für den vorgesehenen Verwendungszweck aufgrund ihrer hohen Viskosität nicht einsetzbar ist, wobei man jedoch die Füllstoffe mit dem Bindemittel unter Einwirkung einer Schwingung im Frequenzbereich von 20 Hz bis 50 kHz mit einer Amplitude von 1 µm bis 5 µm vermischt, wodurch die Viskosität auf einen einsetzbaren Wert vermindert wird.

Aus der WO 01/17454 A1 geht ein Verfahren und ein Handgerät zum Einfüllen einer Zahnfüllmasse auf Kunstharzbasis in eine Kavität eines Zahnes hervor.

Der Erfindung liegt die Aufgabe zugrunde, einen Behälter für die Aufnahme einer aushärtbaren medizinischen Füllmasse so auszugestalten, daß er sich für ein Handgerät zur Abgabe der pastösen Füllmasse eignet.

Diese Aufgabe wird durch die Merkmale des Anspruchs 1 gelöst.

Erfindungsgemäß ist ein Behälter für die Aufnahme einer aushärtbaren medizinischen, insbesondere dentalmedizinischen, Füllmasse zum Füllen einer Kavität in einem natürlichen oder künstlichen Körperteil eines menschlichen oder tierischen Körpers vorgesehen, welcher einer Auslaßdüse an seinem vorderen Ende und ein Befestigungselement zum axial und/oder radial festen Verbinden des Behälters mit einem Schwingteil eines medizinischen oder dentalmedizinischen Handgeräts aufweist, wobei der Behälter aus einem schwingungsharten oder schallharten Material, insbesondere Kunststoff, besteht, wobei der Behälter in seinem vorderen Endbereich als eine sich nach vorne verjüngende Kanüle ausgebildet ist, und wobei der Behälter an seinem hinteren Ende einen nach hinten abstehenden Gewindezapfen aufweist, der in eine Schraubverbindung des Schwingteils einschraubbar ist.

Bei dem erfindungsgemäßen Behälter ist eine gute Übertragung der Schwingungsenergie auf den Behälter durch das Vorhandensein eines

Befestigungselementes gewährleistet und außerdem dadurch gewährleistet, daß der Behälter aus einem schwingungsharten oder schallharten Material besteht.

Im Rahmen der Erfindung ist das Schwingteil schwingungsgekoppelt mit dem Behälter für die Füllmasse verbindbar.

Um einen möglichst geringen Verlust der Schwingungsenergie bei der Übertragung der Schwingungen vom Schwingteil auf den Behälter zu gewährleisten, ist der Behälter durch die Verbindung so fest mit dem Schwingteil verbunden, daß eine Schwingungskopplung zwischen dem Behälter und dem Schwingteil sowie auch einem Schwingungsgenerator eines Handgerätes vorhanden ist, die aufgrund der direkten Übertragung die angestrebte große Ausnutzung der Schwingungsenergie ermöglicht. Dies ist dadurch verwirklicht, daß die Verbindung durch eine Schraubverbindung bildbar ist und vorzugsweise dadurch, daß der Behälter mit einer Umfangsfläche an einer Innenumfangsfläche des Schwingteils anlegbar ist .

Nachfolgend werden vorteilhafte Ausgestaltungen und Weiterbildungen der Erfindung anhand von bevorzugten Ausführungsbeispielen und vereinfachten Zeichnungen näher erläutert. Es zeigt:

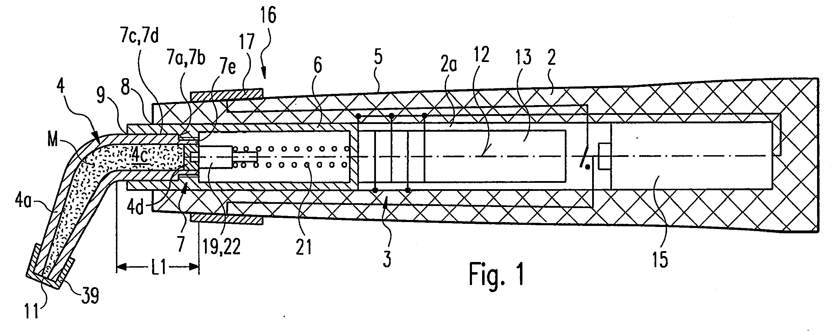

Fig. 1 ein Handgerät im Längsschnitt;
   Die Hauptkomponenten des in seiner Gesamtheit mit 1 bezeichneten Handgerätes sind ein länglicher, insbesondere stabförmiger, und beim Ausführungsbeispiel sich gerade erstreckender Geräteschaft 2, der wenigstens in seinem vorderen Bereich hohl, vorzugsweise hülsenförmig, ausgebildet ist und in dem ein Schwingungsgenerator 3 angeordnet ist, der mit einem Behälter 4 zur Aufnahme einer pastösen Füllmasse in Verbindung steht, deren Viskosität durch Zuführung von Schwingenergie reduzierbar ist, und die im weiteren noch beschrieben wird. Der Behälter 4 ist mit dem Schwingungsgenerator 3 fest verbunden und somit in der Lage, die ihm vom Schwingungsgenerator 3 übertragene Schwingungsenergie aufzunehmen und Schwingungen auszuführen. Hierbei kann es sich um Schwingungen handeln, deren Amplituden in einander entgegengesetzten Richtungen, z. B. in der Längsrichtung des Schaftes 2 oder quer dazu, oder in viele Richtungen und somit räumlich verlaufen.

Dabei ist der Behälter 4 unabhängig vom ein Gerätegehäuse 5 für den Schwingungserreger 3 bildenden Schaft gelagert, so daß er auch die Schwingungen unabhängig vom Gehäuse 5 bzw. Schaft ausführen kann. Dies läßt sich dadurch erreichen, daß der Behälter 4 fest mit einem Schwingteil 6 verbunden ist, auf das der Schwingungsgenerator 3 die von ihm aufgebrachte Schwingungsenergie überträgt.

Das Schwingteil 6 ist beim Ausführungsbeispiel ein länglicher Schwingschaft, der sich längs im Geräteschaft 2 und mit seinem vorderen Ende in den vorderen Bereich des Geräteschaftes 2 erstreckt. Der Behälter 4 ist vorzugsweise ebenfalls länglich ausgebildet und mit seinem hinteren Ende durch eine Verbindungsvorrichtung 7 lösbar mit dem vorderen Ende des Schwingteils 6 verbunden. Hierzu kann der Geräteschaft 2 ein Aufnahmeloch 8 aufweisen, durch dessen vordere Öffnung hindurch das Schwingteil 6 sich erstreckt und z. B. den Geräteschaft 2 nach vorne überragt, oder das Schwingteil 6 kann vor dem vorderen Ende des Geräteschafts 2 enden. In beiden Fällen ist das Schwingteil 6 zur Verbindung mit dem Behälter 4 für diesen von vorne zugänglich, so daß der Behälter 4 mit dem Schwingteil 6 verbindbar ist, und dabei gegebenenfalls durch die Öffnung 8 einführbar ist.

Um die vom Schwingungsgenerator 3 aufgebrachte Schwingungsleistung möglichst verlustlos auf den Behälter 4 und die darin befindliche Füllmasse zu übertragen, ist die Verbindungsvorrichtung 7 spielfrei. Dies läßt sich dadurch erreichen, daß die Verbindungsteile, nämlich das Schwingteil 6 und der Behälter 4, in der Längsrichtung und quer dazu flächig und in wenigstens einer Richtung fest aneinander anliegen. Die Verbindungsvorrichtung 7 ist eine Schraubverbindung. Beim Ausführungsbeispiel nach Fig. 1, bei dem der Behälter 4 in ein Aufnahmeloch 9 des Schwingteils 6 einführbar und verschraubbar ist, kann der Behälter 4 mit einer etwa radialen Schulterfläche 7a an einer Gegenschulterfläche 7b des Schwingteils 6 und mit einer Umfangsfläche an einer Gegenumfangsfläche des Schwingteils 6 unter der Gewindespannung anliegen und mit seiner Umfangsfläche 7c an einer durch die Innenmantelfläche des Lochs 9 gebildeten Gegenumfangsfläche 7d des Schwingteils 6 anliegen. Die starre Anlage kann aber auch durch axial nach innen konvergente und zueinander passende Konusflächen am Außenumfang des Behälters 4 und am Innenumfang des Schwingteils 6 realisiert sein, die die starre Verbindung sowohl in axialer als auch in radialer Richtung gewährleisten. Der Behälter 4 weist an seinem hinteren Ende einen nach hinten abstehenden Gewindezapfen 7e auf, der in die Schraubverbindung einschraubbar ist.

Der Behälter 4 kann durch einen sich in der Längsrichtung gerade erstreckenden Hülsenkörper gebildet sein, der an seinem vorderen Ende eine Auslaßöffnung 11 für die Füllmasse M aufweist. Um die Zugänglichkeit zur Behandlungsstelle zum einen ergonomisch und zum anderen unter Berücksichtigung einer guten Sicht zu verbessern, ist der Behälter 4 in seinem vorderen Endbereich als eine sich nach vorne verjüngende Kanüle 4a ausgebildet, die sich z. B. gekrümmt oder gerade und bezüglich der Längsmittelachse 12 des Geräteschaftes 2 quer , z. B. schräg nach vorne, erstreckt und - längs der Längsmittelachse 12 gesehen - den Umfang des Geräteschaftes 2 überragt.

Der Schwingungsgenerator 3 kann am hinteren Ende des vorzugsweise zylindrischen und hohlen Schwingteils 6 angeordnet sein. Es kann sich z. B. um einen elektrischen Schwingungsgenerator 3, insbesondere um einen Piezo-Schwingungsgenerator 3, handeln. Es eignet sich jedoch auch ein pneumatischer Schwingungsgenerator 3 vorzüglich, der mit Druckluft betreibbar ist, die durch eine Zuführungsleitung zuführbar ist, die sich von hinten zum Schwingungsgenerator 3 erstreckt.

Durch einen Piezo-Schwingungsgenerator 3 lassen sich Schwingungen erzeugen, deren Amplituden einander entgegengesetzte Richtungen haben, die z. B. in der Längsrichtung der Längsmittelachse 12 verlaufen. Im Rahmen der Erfindung kann die Richtung der Amplituden jedoch auch quer zur Längsmittelachse 12, z. B. radial, gerichtet sein.

Wie es Fig. 1 zeigt, kann der Schwingungsgenerator 3 zwischen dem Schwingteil 6 und einem Gegenschwingteil 13 angeordnet sein, das sich ebenfalls im Hohlraum 2a des Geräteschaftes 2 befindet, wobei der Schwingungsgenerator 3 ein das Schwingteil 6 und das Gegenschwingteil 13 miteinander verbindendes Verbindungsglied bildet. Zur radialen Lagerung des z. B. zylindrischen Schwingteils 6 kann im Geräteschaft 2 ein z. B. zylindrisches Aufnahmeloch 8 angeordnet sein, in dem das Schwingteil 6 mit geringem radialen Bewegungsspiel gelagert ist. Zur axialen Positionierung des Schwingteils 6 sind nicht dargestellte Positionierelemente vorgesehen. Im Bereich des Schwingungsgenerators 3 und insbesondere im Bereich des Gegenschwingteils 13 ist der Hohlraum 2a des Geräteschaftes 2 größer ausgebildet als der Schwingungsgenerator 3 und/oder das Gegenschwingteil 13.

Im hinteren Bereich des Geräteschaftes 2 kann eine Energiequelle 15 angeordnet sein, z. B. eine Batterie, insbesondere ein zum Aufladen von außen zugänglicher Akkumulator, die durch elektrische Leitungen mit dem Schwingungsgenerator 3 und einer in ihrer Gesamtheit mit 16 bezeichneten Steuereinrichtung zum Verändern und Einstellen der vom Schwingungsgenerator 3 auf den Behälter 4 bzw. die Füllmasse M übertragbaren Schwingungsenergie verbunden ist. Zum Verändern der Schwingungsenergie weist die Steuereinrichtung 16 ein bewegbar gelagertes Einstell- bzw. Steuerelement 17 auf, das Teil einer bezüglich dem Handgerät 1 externen Steuereinrichtung sein kann und z. B. an einem Fußschalter angeordnet sein kann, oder am Geräteschaft 2 bewegbar gelagert ist. Beim Ausführungsbeispiel ist das Steuerelement 17 im vorderen Endbereich des Geräteschaftes 2 an dessen Umfang angeordnet und längs der Längsmittelachse 12 oder quer dazu bewegbar, z. B. in der Umfangsrichtung. Dabei kann das Steuerelement 17 ein Ringelement sein, wie es Fig. 1 beispielhaft zeigt. Durch eine Bewegung und Rückbewegung des Steuerelementes 17 läßt sich die übertragbare Schwingungsenergie wahlweise vergrößern und verringern.

Bei der Füllmasse M handelt es sich um ein Füllmaterial zum Füllen von Kavitäten des menschlichen oder tierischen Körpers, insbesondere um eine Füllmasse auf Kunstharzbasis, z. B. mit einem mit ultraviolettem Licht aushärtbaren Kunstharz, wie es z. B. bei dentalen Füllmassen M bekannt ist. Um beim Aushärten eine Volumenverringerung der Füllmasse M durch Schwinden zu verringern, enthält der Kunstharz eingemischte anorganische Materialien z. B. in Pulverform. Je höher der Gehalt der Füllmasse M an einem solchen anorganischen Material ist, desto größer ist die Zähigkeit bzw. Viskosität der Füllmasse M und desto geringer ist das beim Aushärten auftretende Schwindmaß. Durch die Beaufschlagung der Füllmasse M mit Schwingungsenergie wird die Viskosität der Füllmasse M verringert, so daß sie in der Lage ist, durch die Auslaßöffnung 11 aus dem Behälter 4 auszutreten und die Kavität zu füllen sowie auch kleine Ecken der Kavität auszufüllen.

Dabei ermöglicht es die Steuereinrichtung 16 nicht nur die Konsistenz bzw. Viskosität der Füllmasse M, sondern auch deren aus der Auslaßöffnung 11 austretende Fördermenge an örtliche Erfordernisse anzupassen, z. B. an unterschiedliche Formen und/oder Größen der jeweiligen Kavität. Um eine Kavität engen Querschnitts oder mit kleinen Ecken oder Spalten auszufüllen, läßt sich die Viskosität der Füllmasse M durch eine Vergrößerung der Schwingungsleistung verringern. Außerdem läßt sich die jeweils gewünschte Fördermenge und somit der Füllvorgang an örtliche Erfordernisse anpassen. Für große Kavitäten läßt sich die Fördermenge vergrößern und für kleine Kavitäten verringern. Beim Ausführungsbeispiel nach Fig. 1 ist es vorteilhaft, die Viskosität der Füllmasse M, den von einem Druckkolben 22 auf die Füllmasse M ausgeübten Druck, die Schwingungsleistung und die Größe der Auslaßöffnung 11 so aufeinander abzustimmen, daß bei ausgeschaltetem Schwingungsgenerator 3 die Füllmasse M nicht aus dem Behälter 4 austritt und somit darin verbleibt und erst bei eingeschaltetem Schwingungsgenerator 3 mit einer geringen Fördermenge aus der Auslaßöffnung 11 austritt, wobei diese Fördermenge durch eine Vergrößerung der Schwingungsleistung wahlweise vergrößert und wieder verringert werden kann.

Bei dem Ausführungsbeispiel gemäß Fig. 1 weist der Behälter 4 eine Umfangswand 4b auf, die wenigstens in einem hinteren Längsabschnitt einen prismatischen, insbesondere zylindrischen Aufnahmeraum 4c umgibt, der durch einen vom hinteren Ende her eingeschobenen Kolbendeckel 4d passender Querschnittsform geschlossen ist.

Beim Ausführungsbeispiel nach Fig. 1 ist die Länge L1 des sich gerade erstreckenden Längsabschnitts des Aufnahmeraums 4c bzw. des sich gerade erstreckenden hinteren Längsabschnitts der Umfangswand 4b an die Tiefe des Aufnahmeloches 9 angepaßt.

Im Gegensatz zu üblichen bei Fugenabdichtungs-Geräten bekannten Kartuschen ist beim erfindungsgemäßen Behälter 4 die Umfangswand 4b nicht nur wesentlich dicker bemessen, sondern sie besteht auch aus einem schallharten Material, das sich für eine Übertragung eines Körperschalls durch die Umfangswand 4b auf das Füllmaterial M gut eignet. Aus einem solchen Material besteht auch der Kolbendeckel 4d. Als ein solches schallhartes Material eignet sich ein Metall, insbesondere Leichtmetall wie Aluminium, oder Kunststoff wegen eines angestrebten geringen Gewichtes gut.

Bei dem Ausführungsbeispiel nach Fig. 1 ist es vorteilhaft, die Auslaßöffnung 11 durch einen Verschluß zu verschließen, der z. B. durch eine Verschlußkappe 39 gebildet sein kann, die auf das als Kanüle 4a ausgebildete vordere Ende des Behälters 4 lösbar aufgesteckt ist.

## Patentansprüche

1. Behälter (4) für die Aufnahme einer aushärtbaren medizinischen, insbesondere dentalmedizinischen, Füllmasse (M) zum Füllen einer Kavität in einem natürlichen oder künstlichen Körperteil eines menschlichen oder tierischen Körpers, mit einer Auslaßdüse (11) an seinem vorderen Ende und einem Befestigungselement (7e) zum axial und/oder radial festen Verbinden des Behälters (4) mit einem Schwingteil (6) eines medizinischen oder dentalmedizinischen Handgeräts (1),
wobei der Behälter (4) aus einem schwingungsharten oder schallharten Material, insbesondere Kunststoff, besteht, und wobei der Behälter (4) in seinem vorderen Endbereich als eine sich nach vorne verjüngende Kanüle ausgebildet ist,
**dadurch gekennzeichnet,**
**dass** der Behälter (4) an seinem hinteren Ende einen nach hinten abstehenden Gewindezapfen (7e) aufweist, der in eine Schraubverbindung (7) des Schwingteils (6) einschraubbar ist.

## Claims

1. A container (4) for receiving a curable medical, in particular dental-medical, filler mass (M) for filling a cavity in a natural or artificial part of the body of a human or animal body,
having an outlet nozzle (11) at its forward end and a fastening element (7e) for the axially and/or radially fixed connection of the container (4) with an oscillation part (6) of a medical or dental-medical hand apparatus (1), wherein the container (4) is made of a vibration-hard or reverberant material, in particular plastics material,
and wherein the container (4) is formed in its forward end region as a forwardly tapering cannula,
**characterised in that**
the container (4) has at its rearward end a rearwardly projecting threaded pin (7e), which can be screwed into a screw connection (7) of the oscillation part (6).

## Revendications

1. Réservoir (4) destiné au logement d'une masse de remplissage (M) pouvant durcir destinée à un usage médical, en particulier médico-dentaire, servant à remplir une cavité dans une partie du corps naturelle ou artificielle d'un corps humain ou animal,
comprenant une buse d'évacuation (11) au niveau de son extrémité avant et un élément de fixation (7e) servant à relier de manière fixe axialement et/ou radialement le réservoir (4) à une partie vibrante (6) d'un appareil manuel (1) destiné à un usage médical ou médico-dentaire,
sachant que le réservoir (4) est constitué d'un matériau dur résistant aux vibrations ou réverbérant, en particulier une matière plastique,
et sachant que le réservoir (4) est réalisé, dans sa zone d'extrémité avant, sous la forme d'une canule se rétrécissant vers l'avant,
**caractérisé en ce**
**que** le réservoir (4) présente, au niveau de son extrémité arrière, un goujon fileté (7e) faisant saillie vers l'arrière, lequel peut être vissé dans un système d'assemblage par vissage (7) de la partie vibrante (6).
